Europäisches Patentamt

European Patent Office

Office européen des brevets

(11) Veröffentlichungsnummer: **0 074 982**
**B1**

(12) # EUROPÄISCHE PATENTSCHRIFT

(45) Veröffentlichungstag der Patentschrift:
**19.06.85**

(51) Int. Cl.⁴: **A 23 N 7/00,** A 23 N 7/02

(21) Anmeldenummer: **82900954.7**

(22) Anmeldetag: **24.03.82**

(86) Internationale Anmeldenummer:
**PCT/EP 82/00064**

(87) Internationale Veröffentlichungsnummer:
**WO 82/03314 (14.10.82** Gazette **82/25)**

(54) **REINIGUNGS- BZW. SCHÄLMASCHINE.**

(30) Priorität: **02.04.81 DE 3113348**

(43) Veröffentlichungstag der Anmeldung:
**30.03.83 Patentblatt 83/13**

(45) Bekanntmachung des Hinweises auf die Patenterteilung:
**19.06.85 Patentblatt 85/25**

(84) Benannte Vertragsstaaten:
**AT BE FR GB LU NL SE**

(56) Entgegenhaltungen:
**DE - A - 959 144**
**DE - A - 2 743 338**
**NL - A - 8 006 224**
**US - A - 3 123 114**
**US - A - 4 258 069**

(73) Patentinhaber: **USINE DE WECKER S.A.R.L., Wecker**
**Luxemburg (LU)**

(72) Erfinder: **KUNZ, Paul, Deishardtstrasse 3,**
**D-5419 Döttesfeld (DE)**

(74) Vertreter: **Prüfer, Lutz H., Dipl.-Phys., Harthauser**
**Strasse 25d, D-8000 München 90 (DE)**

**Beschreibung**

Die Erfindung betrifft eine Reinigungs- bzw. Schälmaschine mit einem im wesentlichen vertikal ausgerichteten Zylinder mit einer Vielzahl von über die Wandung verteilten Öffnungen und einer innerhalb des Zylinders angeordneten Förderschnecke zum Fördern von zu behandelndem Gut, die an einem Hohlzylinder befestigt ist, der an seiner Oberseite zur Aufnahme von zu bearbeitendem Produkt offen ist, und dessen Unterseite offen ist.

Aus der US-PS 3 123 114 ist eine Reinigungs- und Schälmaschine der eingangs beschriebenen Art bekannt. Bei dieser Maschine werden Früchte oder Gemüse von oben zugeführt, fallen durch eine Röhre nach unten und werden dann mittels einer Förderschnecke wieder nach oben transportiert, wobei sie während der Beförderung nach oben mit einer Wand mit Öffnungen der Maschine in Berührung kommen. Die Wand weist eine Mehrzahl von messerartigen Kanten auf, die auf das Obst bzw. Gemüse eine Schälwirkung ausüben. Nach dem Hochtransport tritt das Gut dann an einer Austrittsöffnung aus der Maschine aus. Bei dieser Maschine tritt das Problem auf, daß das Gut beim Herunterfallen durch die innere Röhre leicht beschädigt werden kann. Beim anschließenden Schälen an den messerartigen Kanten der die Förderschnecke umgebenden Wand wird ein einmal beschädigtes Gut noch weiter zerstört.

Aufgabe der Erfindung ist es, eine Reinigungs- bzw. Schälmaschine der eingangs beschriebenen Art zu schaffen, mit der obige Nachteile vermieden werden. Insbesondere soll eine schonende Zuführung des Gutes nach unten möglich sein, und das Nach-Unten-Fallen und Aufprallen des Gutes vermieden werden. Gleichzeitig soll ein einwandfreies Reinigen und gewünschtes Schälen von Früchten, insbesondere Kartoffeln und ähnlichem möglich sein.

Diese Aufgabe wird durch eine Reinigungs- bzw. Schälmaschine der eingangs beschriebenen Art gelöst, die gemäß der Erfindung dadurch gekennzeichnet ist, daß am unteren Ende der Förderschnecke ein horizontales Bodenteil vorgesehen ist, und daß in dem Hohlzylinder eine rotierende Schnecke bzw. Wendel angeordnet ist.

Weitere Merkmale und Zweckmäßigkeiten der Erfindung ergeben sich aus der Beschreibung von Ausführungsbeispielen anhand der Figuren. Von den Figuren zeigt

Fig. 1 eine Schnitt-Seitenansicht der Reinigungs- bzw. Schälmaschine;

Fig. 2 eine Draufsicht gemäß der Linie I-I in Fig. 1 auf ein Detail der Vorrichtung; und

Fig. 3 eine abgewandelte Ausführungsform des in Fig. 2 gezeigten Details.

Die Reinigungs- bzw. Schälmaschine umfaßt ein stabiles Gehäuse 2. Auf einem Träger 3 desselben ist mittensymmetrisch ein Lagerbock 4 angeordnet. Dieser trägt auf seiner Oberseite ein erstes Wälzlager 5. Auf dieses ist ein Zylinder 6 aufgesetzt. Der Zylinder weist an seiner Außenseite über die Umfangsrichtung sich erstreckende Gleitringe 7, 8 auf, die auf an der Innenseite der Wandung des Gehäuses 2 befestigten Gleitrollen 9, 10 laufen. Auf diese Weise ist der Zylinder 6 sowohl axial nach unten als auch radial geführt. Auf der Unterseite ist der Zylinder durch einen Boden 13 verschlossen. Dieser sitzt auf einem zentral angeordneten Lagerzylinder 14, mit dem der Zylinder auf dem Wälzlager 5 aufgesetzt ist. Auf der Außenseite des Lagerzylinders 14 ist eine Riemenscheibe 15 befestigt. Diese ist über einen Riemen 16 mit einem Antriebsmotor 17 antriebsmäßig verbunden und kann über diesen in Drehung versetzt werden.

Der Mantel 18 des Zylinders 6 ist vorzugsweise aus einer Vielzahl von einen Abstand zueinander aufweisenden Stäben 19 gebildet. Von den Stäben ist zur Vereinfachung nur ein Teil gezeichnet. Der Abstand zwischen benachbarten Stäben muß stets kleiner als die äußere Abmessung der kleinsten zu behandelnden Früchte sein, damit diese nicht zwischen den Stäben hindurchfallen können. Andererseits soll der Abstand aber so groß wie möglich sein, damit beim Reinigen bzw. Schälen von den Früchten abgetrennte Teile wie Schalen durch die Stäbe hindurchfallen können.

Die Stäbe 19 können beispielsweise als runde Stäbe oder auch als flache Stäbe ausgebildet sein. Sie können eine glatte oder eine rauhe Oberfläche aufweisen.

Vorzugsweise ist der Mantel 18 des Zylinders 6 sowohl in Umfangsrichtung als auch in vertikaler Richtung aus einer Mehrzahl von zueinander unterteilten Feldern 20, 21, 22 zusammengesetzt. Jedes Feld umfaßt eine Vielzahl von Stäben 19, 23 und ist einzeln auswechselbar und wird mit Hilfe nichtgezeigter Schrauben an einem Rahmen 24 des Zylinders festgeschraubt.

In dem Zylinder 6 ist ein schraubenförmiges Element 25 mit einer Förderschnecke 26 angeordnet. Das schraubenförmige Element umfaßt ein horizontales Bodenteil 27, welches in seinem Durchmesser gerade so viel kleiner als der Innendurchmesser des Zylinders 6 ist, daß es ungestört in dem Zylinder rotieren kann. Das Bodenteil 27 ist fest mit einer in der Symmetrieachse unterhalb der angeordneten Welle 28 verbunden. Die Welle 28 weist auf ihrer Unterseite einen Absatz 29 auf, mit dem sie über ein Wälzlager 30 im Inneren des Lagerbockes 4 rotierbar eingesetzt ist. Auf einem durch den Lagerbock 4 nach unten hindurchgeführten Ansatz der Welle 28 ist eine Riemenscheibe 31 fest angebracht. Diese ist über einen Riemen 32 antriebsmäßig mit einem Motor 33 verbunden.

Über dem Boden ist die um die vertikale Symmetrieachse des Zylinders symmetrisch angeordnete Förderschnecke 26 vorgesehen. Diese umfaßt einen Hohlzylinder 34, der in einem Abstand über dem Bodenteil 27 mittels vertikaler Streben 35, 36 über dem Bodenteil gehalten und mit diesem fest verbunden ist. Um die Streben und den Hohlzylinder herum sind die eigentlichen Schneckenflügel 37 der Förderschnecke 26 angeordnet. Der unterste Schneckenflügel ist mit dem Bodenteil 37 fest verbunden. Der Außendurchmesser der Schneckenflügel ist so gewählt, daß er gerade um so viel kleiner als der Innendurchmesser des Zylinders 6 ist, daß ein ungestörtes Rotieren in dem Zylinder 6 möglich ist. Der Hohlzylinder 34 weist an seinem oberen Ende auf der Außenseite einen Gleitring 38 auf.

Auf seiner oberen Stirnseite 39 ist der Zylinder offen. Über dieser Stirnseite ist eine Haube 40 angeordnet, die auf ihrer einen Seite in eine trichterartige Rutsche 41 mündet. Die Haube ist mit dem Gehäuse 2 fest verbunden und wird von diesem getragen. An einer Deckplatte 42 weist die Haube in Umfangsrichtung symmetrisch um die Mittenachse des Zylinders 6 und den Hohlzylinder 34 herum verteilt angeordnete Gleitrollen 43, 44, auf, an deren Innenseite der Gleitring 38 des Hohlzylinders 34 geführt ist. Mittels des Lagers 30 und der Führung 38, 43, 44 ist das schraubenartige Element in axialer Richtung nach unten und radialer Richtung nach außen drehbar gelagert.

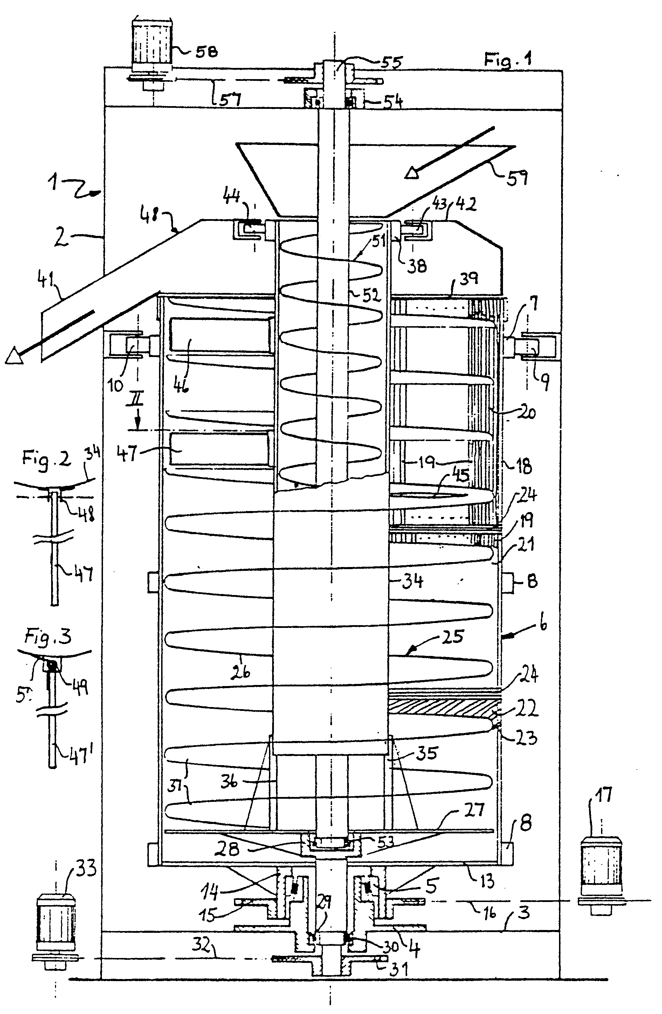

Auf den Schraubenflügeln sind in Umfangsrichtung verteilt und sich nahezu in radialer Richtung erstreckende Rippen 45 auf der Oberfläche angeordnet. Ferner sind vorzugsweise in jedem Schneckengang etwa 2—3 Klappen 46, 47 vorgesehen (in dem gezeigten Ausführungsbeispiel sind zur Vereinfachung lediglich 2 solche Klappen dargestellt). Diese Klappen sind gemäß einer Ausführungsform in der aus Fig. 2 ersichtlichen Weise außen an der Wand des Hohlzylinders 34 mittels einer Halterung 48 befestigt. Die Klappe ist aus einem elastischen Material wie Gewebe-Gummi gebildet, welches so gewählt ist, daß die Klappe einerseits eine ausreichende Standfestigkeit besitzt und einem zu fördernden Gut einen gewissen Widerstand entgegensetzt, andererseits aber so elastisch ist, daß das zu fördernde Gut schließlich die Klappe aus ihrer dargestellten Stellung auslenken kann und weiterbefördert wird. Die Klappe hat dabei eine solche Größe, daß zwischen Schneckenflügel und Klappe und zwischen Klappe und Mantel des Zylinders 6 keine Früchte hindurchgelangen können, daß andererseits aber die Klappe weder mit dem Schneckenflügel noch mit dem Mantel des Zylinders in Berührung gelangt. Vorzugsweise beträgt der Abstand zwischen dem Mantel des Zylinders 6 und der Klappe etwa 3—6 cm.

Gemäß einer weiteren in Fig. 3 gezeigten Ausführungsform kann die Klappe 47' auch aus einem standfesteren Material wie beispielsweise Blech gebildet sein. Die Klappe 47' ist dann in die in den Fig. 1 und 3 gezeigte Stellung beispielsweise mittels einer Feder 50 so vorgespannt, daß der Schneckengang durch die Klappe unterteilt wird. Das zu fördernde Material wird durch die Klappe so lange aufgehalten, bis es den Widerstand der Feder 50 überwindet und die Klappe aus der gezeigten Grundstellung auslenkt und weiterbefördert wird.

Im Inneren des Hohlzylinders 34 ist eine weitere Wendel bzw. Förderschnecke 51 vorgesehen. Diese weist einen Schneckenkern 52 auf, welcher auf seiner Unterseite durch ein Loch in dem Boden 13 hindurchgeführt ist und mittels eines Lagers 53 auf der Welle 28 aufsitzt und durch das Lager relativ zu dieser drehbar ist. An seinem entgegengesetzten oberen Ende ist der Schneckenkern 52 mittels eines an dem Gehäuse 2 befestigten Lagers 54 in seiner vertikalen Stellung in der Symmetrieachse des Zylinders 6 und damit des Hohlzylinders 34 drehbar gelagert. Auf einem durch das Lager 54 nach außen hindurchgeführten Ansatz 55 ist eine Riemenscheibe 56 befestigt, die über einen Riemen 57 mit einem Motor 58 antriebsmäßig verbunden ist.

Der Hohlzylinder 34 erstreckt sich durch die Haube 48 nach oben hindurch. Auf seiner oben offenen Seite ist ein Einfülltrichter 59 vorgesehen.

Im Betrieb wird die Förderschnecke 26 mittels des Motors 27 so in Drehung versetzt, daß eine Förderung von unten nach oben erfolgt. Gleichzeitig wird der Zylinder 6 mittels des Motors 33 in Rotation versetzt. Schließlich wird die Förderschnecke 51 über den Motor 58 so gedreht, daß einzufüllendes Gut von dem Einfülltrichter 59 nach unten gelangt.

Das einzufüllende Gut wird über den Einfülltrichter 59 eingegeben und gelangt über die Förderschnecke 51 in die Mitte des Bodenteiles 27 nach unten. Durch die Drehung der Förderschnecke 25 und damit des Bodenteiles 27 wird auf das nach unten fallende Gut eine Zentrifugalkraft ausgeübt, wodurch das Gut nach außen zum Mantel des Zylinders 6 hin bewegt wird. Das Gut wird dabei von den Schneckenflügeln 37 ergriffen und langsam nach oben bewegt. Die Drehgeschwindigkeit der Föderschnecke 25 wird dabei so eingestellt, daß das zu behandelnde Gut einerseits eine solche Zentrifugalkraft erhält, daß es stets zu dem Mantel des Zylinders 6 hin bewegt wird und daß es andererseits mittels der Förderschnecke nach oben gefördert wird. Durch die auf den Flügeln der Förderschnecke vorgesehenen Rippen 45 wird erreicht, daß das nach oben zu fördernde Gut zusätzlich umgeworfen wird, so daß eine noch gleichmäßigere Wechselwirkung des Gutes mit dem Mantel auftritt.

Damit eine ausreichende Zentrifugalkraft erzeugt wird, muß die Umdrehungszahl der Förderschnecke 25 ziemlich groß sein. Das hat zur Folge, daß das zu fördernde Gut sehr schnell durch die Förderschnecke nach oben geführt wird. Damit trotzdem ein ausreichendes Behandeln erfolgt, ist eine ziemlich große Bauhöhe erforderlich. Damit auch bei geringerer Bauhöhe eine ausreichend lange Wechselwirkung zwischen dem zu behandelnden Gut und der Wandung des Zylinders 6 erfolgt, sind die Klappen 46, 47 vorgesehen. Sie bremsen das zu fördernde Gut jeweils ab und erhöhen damit die Wechselwirkung zwischen dem zu behandelnden Gut und der Wandung auch bei einer vergleichsweise geringen Bauhöhe.

Durch den Kontakt des zu behandelnden Gutes mit dem Mantel des Zylinders und insbesondere mit den Stäben desselben erfolgt der gewünschte Abrieb. Damit ein ausreichender Abrieb erfolgt, wird die Relativgeschwindigkeit zwischen Zylinder 6 und Förderschnecke 26 entsprechend eingestellt. Vorzugsweise wird dabei der Zylinder 6 selbst in eine derart hohe Rotation versetzt, daß die beim Abreiben des zu behandelnden Gutes an die Stangen des Mantels 18 gelangenden Reste wie beispielsweise Schalen selbst wiederum mit einer solchen Zentrifugalkraft beaufschlagt werden, daß sie zwischen den Stäben hindurch nach außen fliegen. Sie fallen dann in den freien Raum zwischen den Mantel 18 und dem Gehäuse 2 nach unten und können dann dort abgeführt werden.

In einer besonderen Ausführungsform wird der Zylinder 6 in der gleichen Richtung und mit der gleichen Geschwindigkeit oder sogar einer größeren Geschwindigkeit als die Förderschnecke 26 gedreht. Dadurch wird erreicht, daß das zu behandelnde Gut nur sehr langsam durch den Zylinder nach oben gefördert wird. Die Wechselwirkung des Gutes mit dem Mantel 18 des Zylinders ist dadurch geringer. Dadurch kann die Drehgeschwindigkeit der Förderschnecke 26 erhöht werden, was gleichzeitig eine Erhöhung der Zentrifugalkraft bedeutet. Bei einer derart betriebenen Vorrichtung sind die Stäbe 19, 23 vorzugsweise glatt oder gummi- bzw. kunststoffbeschichtet ausgeführt. Mit dieser Vorrichtung ist es möglich, nicht nur harte Früchte wie Kartoffeln sondern auch weichere Früchte wie beispielsweise Tomaten zu bearbeiten.

Die Stäbe können wie in den Feldern 20 und 21 vertikal ausgebildet sein oder aber auch eine Neigung wie in dem Feld 22 angedeutet besitzen. Insbesondere können auch horizontale kreisrunde Stabringe Verwendung finden. Die Stäbe sollen lediglich jeweils so angeordnet sein, daß sie einen ausreichenden Winkel mit dem Rand der Flügel der Förderschnecke 26 bilden, damit die Früchte möglichst nicht zwischen Flügel und Stäben eingequetscht werden.

In der oben beschriebenen Ausführungsform fallen die Schalen und sonstigen Abfälle durch die Stäbe nach außen in den Raum zwischen Zylinder 6 und Gehäuse 2 aufgrund der Drehung des Zylinders 6. Gemäß einer Ausführungsform der Erfindung sind auf der Außenseite des Zylinders 6 nicht gezeigte Bürsten angeordnet, die die heraustretenden Abfälle von den Stäben abbürsten.

Da ein optimales Ergebnis beim Reinigen bzw. Schälen der zu behandelnden Früchte auch von der Art der zu behandelnden Früchte abhängt, sind die Wandteile des Zylindermantels so auswechselbar, daß etwa mehr oder weniger rauhe Segmente oder Segmente mit runden oder flachen Stäben o. ä. einsetzbar sind.

In dem oben beschriebenen Ausführungsbeispiel wurde der Mantel von in einem Abstand befindlichen Stäben gebildet. Natürlich sind auch andere Wandformen denkbar, bei denen geeignete Durchbrechungen vorhanden sind. Die Ausbildung mit den Stäben hat jedoch den Vorteil einer besonders einfachen Herstellung bei gleichzeitig großer Wirksamkeit.

In den oben beschriebenen Ausführungsbeispielen erfolgt die Zuführung des zu behandelnden Gutes über einen über dem Bodenteil 27 angeordneten Hohlzylinder 34. Grundsätzlich wäre es auch möglich, statt dessen in dem Bodenteil 27 möglichst mittensymmetrisch ein Loch vorzusehen, an dem sich nach unten eine Fördereinrichtung anschließt, mittels der das zu behandelnde Gut durch das Loch nach oben auf den Bodenteil 27 gefördert wird.

Sowohl bei einer oben beschriebenen Zuführung zentral von oben als auch bei einer zentralen Zuführung von unten wird der Vorteil erreicht, daß eine kontinuierliche Beschickung und somit ein kontinuierlicher Betrieb der Vorrichtung erfolgen kann.

**Patentansprüche**

1. Reinigungs- bzw. Schälmaschine (1) mit einem im wesentlichen vertikal ausgerichteten Zylinder (6) mit einer Vielzahl von über die Wandung (18) verteilten Öffnungen und einer innerhalb des Zylinders (6) angeordneten Förderschnecke (26) zum Fördern von behandelndem Gut, die an einem Hohlzylinder (34) befestigt ist, der an seiner Oberseite zur Aufnahme von zu bearbeitendem Produkt offen ist und dessen Unterseite offen ist, dadurch gekennzeichnet, daß am unteren Ende der Förderschnecke (26) ein horizontales Bodenteil (27) vorgesehen ist und in dem Hohlzylinder (34) eine rotierbare Schnecke bzw. Wendel (51) angeordnet ist.

2. Reinigungs- bzw. Schälmaschine nach Anspruch 1, dadurch gekennzeichnet, daß der Mantel (18) des Zylinders (6) um seine vertikale Achse rotierbar ausgebildet ist und die relative Drehgeschwindigkeit zwischen dem Mantel (18) des Zylinders (6) und der Förderschnecke (26) so einstellbar ist, daß die Differenz der beiden Drehgeschwindigkeiten größer als Null oder gleich Null sein kann.

3. Reinigungs- bzw. Schälmaschine nach Anspruch 1 oder 2, dadurch gekennzeichnet, daß der Mantel (18) des Zylinders (6) aus einer Mehrzahl von Stäben (19, 23) gebildet ist.

4. Reinigungs- bzw. Schälmaschine nach einem der Ansprüche 1 bis 3, dadurch gekennzeichnet, daß der Mantel (18) aus einer Mehrzahl von auswechselbaren Wandteilen (20, 21, 22) gebildet ist.

**Claims**

1. Cleaning or peeling machine (1) with a substantially vertically oriented cylinder (6) having a plurality of openings distributed over the wall (18) and with a feeding screw (26) disposed within the cylinder (6) for conveying material to be processed, the feeding screw being attached to a hollow cylinder (34) having an open top side for receiving product to be processed and an open bottom side, characterized in that a horizontal bottom part (27) is provided at the lower end of the feeding screw (26) and that a rotatable screw or worm (51) is disposed in the hollow cylinder (34).

2. Cleaning or peeling machine according to claim 1, characterized in that the shell (18) of the cylinder (6) is formed rotatable about the vertical axis thereof and that the rotational speed of the shell (18) of the cylinder (6) relative to the feeding screw (26) is adjustable such that the difference of both rotational speeds may be equal to or larger than zero.

3. Cleaning or peeling machine according to claim 1 or 2, characterized in that the shell (18) of the cylinder (6) is formed of a plurality of rods (19, 23).

4. Cleaning or peeling machine according to any of the claims 1 to 3, characterized in that the shell (18) is formed ota plurality of exchangeable wall portions (20, 21, 22).

**Revendications**

1. Machine à nettoyer ou à éplucher (1) comportant un cylindre (6) pratiquement aligné verticalement muni de multiples ouvertures réparties sur la paroi (18) et une vis transporteuse (26) disposée à l'intérieur du cylindre pour ce transport de produit à traiter, qui est fixée à un cylindre creux (34) qui est ouvert à son côté supérieur pour recevoir à traiter et donc le côté inférieur est ouvert, caractérisée par le fait qu'à l'extrémité inférieure de la vis transporteuse (26) est prévue une partie de fond horizontal (27) et que dans le cylindre creux (34) est disposée une vis ou hélice tournante (51).

2. Machine à nettoyer ou à éplucher selon la revendication 1, caracterisée par le fait que la paroi latérale (18) du cylindre (6) est conçue de manière à pouvoir tourner autour de son axe vertical et que la vitesse relative de rotation entre la paroi latérale (18) du cylindre (6) et la vis transporteuse (26) est réglable de telle sorte que la différence des deux vitesses de rotation peut être plus grande que zéro ou égale à zéro.

3. Machine à nettoyer ou à éplucher selon l'une des revendications 1 et 2, caractérisée par le fait que la paroi latérale (18) du cylindre (6) est formée de multiples barreaux (19, 23).

4. Machine à nettoyer ou à éplucher selon l'une des revendications 1 à 3, caractérisée par le fait que la paroi latérale (18) est formée de multiples parties de paroi interchangeables (20, 21, 22).

0 074 982

Fig.1

Fig.2

Fig.3

7